# EUROPEAN PATENT SPECIFICATION

(11) **EP 4 253 427 B1**
(45) Date of publication and mention of the grant of the patent: **29.01.2025**
(21) Application number: 23164358.6
(22) Date of filing: 27.03.2023
(51) Int. Cl.: C08F 8/32, B01J 41/12, B01D 69/02, B01D 71/80, C08J 5/22

(54) **STYRENIC BLOCK COPOLYMER AND ANION EXCHANGE MEMBRANES MADE THEREOF**
STYROLBLOCKCOPOLYMER UND DARAUS HERGESTELLTE ANIONENAUSTAUSCHMEMBRANEN
COPOLYMÈRE SÉQUENCÉ STYRÉNIQUE ET MEMBRANES ÉCHANGEUSES D'ANIONS FABRIQUÉES À PARTIR DE CELUI-CI

(30) Priority: 29.03.2022 US 202263362076 P
(43) Date of publication of application: 04.10.2023
(73) Proprietor: Kraton Polymers Nederland B.V., 1322 CE Almere (NL)
(72) Inventor: MHETAR, Vijay, Houston, Texas 77084 (US); DING, Ruidong, Houston, Texas 77084 (US); TIAN, Jason, Houston, Texas 77084 (US); TOCCHETTO, Roger, Houston, Texas 77084 (US); YAN, Jiaqi, Houston, Texas 77084 (US); BENING, Robert, Houston, Texas 77084 (US); DESHMUKH, Sanesh, Houston, Texas 77084 (US)
(74) Representative: Henkel & Partner mbB

(56) References cited:
- WO-A1-2016/014636
- CN-A- 115 445 673
- ZENG Q H ET AL: "Anion exchange membranes based on quaternized polystyrene-block-poly(ethylene-ran-butylene)-block-polystyrene for direct methanol alkaline fuel cells", JOURNAL OF MEMBRANE SCIENCE, ELSEVIER BV, NL, vol. 349, no. 1-2, 1 March 2010 (2010-03-01), pages 237 - 243, XP026874433, ISSN: 0376-7388, [retrieved on 20091127]

## Description

### FIELD

The disclosure relates to a styrenic block copolymer-based anion exchange membranes (AEMs), methods of preparation, and applications thereof.

### BACKGROUND

Electrochemical water splitting is one of the practical systems for green hydrogen production. In recent decades, alkaline electrolyzers and proton exchange membrane (PEM) electrolyzers are the most widely used techniques in the hydrogen processing industry. Both techniques have some challenges, like handling of hydrogen, large structure, and platinum (Pt) requirement for construction of the cell. Anion exchange membrane (AEM) electrolyzers can help overcome these challenges including ability to use non-Pt material, high hydrogen storage density, and compact micro-cell structures. A polymer alkaline membrane is a key component that influences the efficiency of the AEM electrolyzers. The life of AEM electrolyzers can be determined by the polymer backbone used in making AEMs.

Hydrogenated styrene-butadiene block copolymers (SEBS) have a great application prospect in phase separation and good alkali resistance due to the unique characteristics of alternating soft and hard blocks and an all-carbon main chain. However, SEBS-based alkaline membranes exhibit high swelling and low dimensional stability due to the special fatty chain backbone structure, and mechanical properties are generally poor in aqueous environments. WO 2016/014636 A1 discloses polymers being suitable to be used in an alkaline exchange membrane or in an anion exchange membrane comprising end groups including quaternized ammonium hydroxide groups. Zeng et al. discloses in J. of Membrane Science 349, 2010, pages 237 to 243 anion exchange membranes based on quaternized polystyrene-block-poly(ethylene-ran-butylene)-block-polystyrene for direct methanol alkaline fuel cells.

There is still a need for polymers having improved thermal and dimensional stability, longer durability, and enhanced ion exchange capacity (IEC), particularly polymers with good phase separation between hydrophilic and hydrophobic phases for use as anion-exchange membranes.

### SUMMARY

The present invention relates to to a selectively quaternized styrenic multiblock copolymer according to claim 1, i.e. to a selectively quaternized styrenic multiblock copolymer comprising at least a block A derived from para-substituted vinyl aromatic monomer, at least a block B comprising a polymerized hydrogenated 1,4-isoprene unit or 1,2 and 1-4 butadiene units and a block C as a mid-block and derived from a vinyl aromatic monomer susceptible to quaternization. the selectively quaternized hydrogenated styrenic block copolymer has a general configuration of a pentablock, a tetrablock, or a triblock with a random structure containing B/C or C/B. The selectively quaternized hydrogenated styrenic block copolymer has an ion exchange capacity (IEC) from 0.5 to 4.0 meq/g, and block C is quaternized having quaternary ammonium cations and a degree of quaternization from 30 mol% to 95 mol%.

Preferably, the selectively quaternized hydrogenated styrenic block copolymer is a pentablock having a structure selected from A-B-C-B-A, A-C-B-C-A, B-C-A-C-B, and mixtures thereof.

In yet another aspect, the anion exchange membrane comprising the selectively quaternized styrenic multiblock copolymer as described in the first aspect can be used as an ionomer and as a membrane in any of water electrolyzers electrolyte, fuel cell separators, anion exchange membranes, proton exchange membranes, electrode assemblies, and water electrolyzer applications.

### DESCRIPTION

The following terms will have the following meanings:
"At least one of [a group such as A, B, and C]" or "any of [a group such as A, B, and C]" means a single member from the group, more than one member from the group, or a combination of members from the group. For example, at least one of A, B, and C includes, for example, A only, B only, or C only, as well as A and B, A and C, B and C; or A, B, and C, or any other all combinations of A, B, and C.

"Selected from X₁, X₂, X₃,..., Xₙ, and mixtures thereof" means a single member of the group or more than a member of the group, e.g., X₁, X₂, X₃, ...Xₙ, or some, or all members of the group X_{1 -} Xₙ being present.

A list of embodiments presented as "A, B, or C" is to be interpreted as including the embodiments: A only, B only, C only, "A or B," "A or C," "B or C," or "A, B, or C."

"Block" as used herein refers to a section of a polymer molecule that comprises a plurality of identical constitutional units (monomers) and possesses at least one constitutional or configurative feature that does not appear in the immediately adjacent sections (blocks).

"Conjugated diene" refers to an organic compound containing conjugated carbon-carbon double bonds and a total of 4 to 12 carbon atoms, such as 4 to 8 carbon atoms, which can be any of 1,3-butadiene and substituted butadienes, including but not limited to 1,3 cyclohexadiene, isoprene, 2,3-dimethyl-1 ,3-butadiene, 1-phenyl-1,3-butadiene, 1,3-pentadiene, 3-butyl-1,3-octadiene, chioroprene, and piperylene, or any combination thereof. In embodiments, the conjugated diene block comprises a mixture of butadiene and isoprene monomers. In embodiments, 1,3-butadiene alone is used.

"Butadiene" refers to 1,3-butadiene.

"Monovinyl arene," or "monoalkenyl arene," or "vinyl aromatic" refers to an organic compound containing a single carbon-carbon double bond, at least one aromatic moiety, and a total of 8 to 18 carbon atoms, such as 8 to 12 carbon atoms. Examples include any of styrene, o-methyl styrene, p-methyl styrene, p-tertbutyl styrene, 2,4-dimethyl styrene, alpha-methyl styrene, vinylnaphthalene, vinyltoluene, vinylxylene, or mixtures thereof. In embodiments, the monoalkenyl arene block comprises a substantially pure monoalkenyl arene monomer. In some embodiment, styrene is the major component with minor proportions (less than 10 wt. %) of structurally related vinyl aromatic monomers such as o-methylstyrene, p-methyl styrene, p-tert-butyl styrene, 2,4- dimethyl styrene, a-methylstyrene, vinylnaphtalene, vinyltoluene, vinylxylene, or combinations thereof. In embodiments, styrene alone is used.

"Vinyl content" refers to the content of a conjugated diene that is polymerized via 1,2-addition in the case of butadiene, or via 3,4-addition in case of isoprene, resulting in a monosubstituted olefin, or vinyl group, adjacent to the polymer backbone. Vinyl content can be measured by nuclear magnetic resonance spectrometry (NMR).

"Coupling efficiency", expressed as % CE, is calculated using the values of the wt. % of the coupled polymer and the wt. % of the uncoupled polymer. The wt. % of the coupled polymer and the uncoupled polymer are determined using the output of the differential refractometer detector. The intensity of the signal at a specific elution volume is proportional to the amount of material of the molecular weight corresponding to a polystyrene standard detected at that elution volume.

"Coupling Agent" or "X" refers to the coupling agents commonly used in the making styrenic block copolymers SBC art. e.g., silane coupling agents such as isobutyl-trimethoxy silane, methyltrimethoxisilane; polyvinyl compounds, polyvinyl arene, di- or multivinylarene compounds; di- or multiepoxides; di- or multiisocyanates; di- or multialkoxysilanes; di- or multiimines; di-or multialdehydes; di- or multiketones; alkoxytin compounds; di- or multihalides, such as silicon halides and halosilanes; mono-, di-, or multianhydrides; di- or multiesters; tin tetrachloride; tetramethyl orthosilicate.

"Polystyrene content" or PSC of a block copolymer refers to the % weight of vinyl aromatic, e.g., polystyrene in the block copolymer, calculated by dividing the sum of molecular weight of all vinyl aromatic blocks by the total molecular weight of the block copolymer. PSC can be determined using any suitable methodology such as proton nuclear magnetic resonance (NMR).

"Molecular weight" or MW refers to the styrene equivalent molecular weight in kg/mol of a polymer block or a block copolymer. MW can be measured with gel permeation chromatography (GPC) using polystyrene calibration standards, such as is done according to ASTM 5296-19. The GPC detector can be an ultraviolet or refractive index detector or a combination thereof. The chromatograph is calibrated using commercially available polystyrene molecular weight standards. MW of polymers measured using GPC so calibrated are styrene equivalent molecular weights or apparent molecular weights. MW expressed herein is measured at the peak of the GPC trace-and is commonly referred to as styrene equivalent "peak molecular weights," designated as Mₚ.

"Predominant" when used in conjunction with a specified monomer means that the monomer can be used in substantially pure form or can be intentionally mixed with certain specific minor amounts of co-monomer (< 20 wt %, or <10 wt.%, or < 5 wt.%, or < 1 wt.%) which may be structurally similar to or structurally different from the major monomer constituent of a block segment.

"Anion exchange membrane or "alkaline exchange membrane" or "AEM"" refers to a semipermeable membrane generally made from ionomers and designed to conduct anions and repel cations.

"Anion exchange membrane electrolyzers (AEME)" or "Anion exchange membrane water electrolyzers (AEMWEs)" refers to an electrolyzers with an ion-conducting polymer electrolyte membrane separating the anode from the cathode. The electrolyzers use electricity to split water (H₂O) into hydrogen and oxygen through an electrochemical reaction.

"Fuel Cell" refers to an electrochemical cell that converts the chemical energy of a fuel (often hydrogen) and an oxidizing agent (often oxygen) into electricity through a pair of redox reactions.

"Selectively quaternized" refers to controlled quaternization, wherein the quaternization is directed selectively to any of mid-block, or end-block of a multiblock copolymer.

"Ion Exchange Capacity" or IEC refers to the total active sites or functional groups responsible for ion exchange in a polymer. Generally, a conventional acid-base titration method is used to determine the IEC, see for example International Journal of Hydrogen Energy, Volume 39, Issue 10, March 26, 2014, Pages 5054-5062, "Determination of the ion exchange capacity of anion-selective membrane." IEC is the inverse of "equivalent weight" or EW, which is the weight of the polymer required to provide 1 mole of exchangeable protons.

The disclosure relates to a styrene-based multiblock copolymer, more specifically: a) styrenic copolymers having at least four blocks, such a tetrablock, or a pentablock, with at least one of the blocks being selectively functionalized (quaternized) with quaternary ammonium ("QA"); or b) styrenic copolymers having at least three blocks, e.g., a triblock with the A-B/C-A structure, where C is quarternized with QA, and B/C block is a randomized block comprising both monomers B and C. The QA functionalized polymers are used in anion-exchange membranes (AEMs) in AEM electrolyzers.

Quaternary Ammonium-Containing multiblock Polymers (SEBS-Multiblock QA): The styrene-based multiblock copolymer is referred herein as SEBS (styrene-ethylene-butylene-styrene), or hydrogenated block copolymers having quaternary ammonium cations, e.g., positively charged polyatomic ions of the structure NR⁺₄, R is an alkyl group or an aryl group.

In embodiments, the SEBS-Multiblock QA is any of: a) a pentablock structure containing A, B, and C blocks, b) a tetrablock structure containing A, B, and C blocks, and c) a triblock with a random structure containing B/C or C/B. In all of the above structures, C is susceptible to quaternization, and C is a mid-block in any of the above structures.

Each A block is derived from para-substituted vinyl aromatic monomer, each B block is derived from a conjugated diene and each C block is derived from vinyl aromatic monomer and susceptible to quaternization (functionalization). Each A and B block is a polymer block resistant to quaternization.

For configurations with multiple A, B, or C blocks, the plurality of A blocks, B blocks, or C blocks can be the same or different.

In embodiments, prior to hydrogenation and prior to quaternization, the SEBS-Multiblock QA copolymer has a general configuration selected from: (A-B-C)n'(A), (A-C-B)n'A, (A-B-C)n'X, A-B-C-B-A, A-C-B-C-A, B-C-A-C-B, A-B-C-A, A-B/C-A, or A-C/B-A, or mixtures thereof, where n' is an integer from 2 to 30 or 2 to 20 in embodiments; and X is a coupling agent residue.

In embodiments, the A block is derived from polymerized para-substituted styrene monomers.

In embodiments, the A block is a para-substituted styrene monomer selected from para-methylstyrene, para-ethylstyrene, para-n-propylstyrene, para-iso-propylstyrene, para-n-butylstyrene, para-sec-butylstyrene, para-iso-butylstyrene, para-t-butylstyrene, isomers of para-decylstyrene, isomers of para-dodecylstyrene and mixtures of the above monomers. Examples of para-substituted styrene monomers include para-t-butylstyrene and para-methylstyrene, with para-t-butylstyrene being most preferred. Monomers can be mixtures of monomers, depending on the particular source.

In embodiments, the polymer block A constitutes from 30-80 wt. % or 35-75 wt.% or 40-70 wt.% or 45-65 wt.% based on the total weight of the multiblock copolymer.

The B block comprises a hydrogenated polymer or copolymer of a conjugated diene derived from isoprene, butadiene, and mixtures thereof. After hydrogenation, each isoprene unit is converted into ethylene-propylene (EP) block, and each butadiene unit is converted to ethylene-butylene (EB) block. In other examples, the B block is any of an acrylate or silicone polymer, or a polymer of isobutylene with a number average molecular weight of > 1000, or >2000, or >4000, or >6000, or >10000. In still another example, the B block is a polymer of isobutylene having a number average molecular weight of at least 1000.

In embodiments, the hydrogenation level of the B block (conjugated diene block) is > 80%, or >90%, or > 95%, or > 98%, or < 99.5%. The hydrogenation level refers to the % of original unsaturated bonds which become saturated upon hydrogenation. The level of hydrogenation in hydrogenated vinyl aromatic polymers can be determined using UV-VIS spectrophotometry and/or proton NMR. The hydrogenation level in hydrogenated diene polymers can be determined using proton NMR.

In embodiments, the polymer block B has a vinyl content from 8-85 wt.%, or >15 wt. %, or < 50 wt. %, or 20-75 wt. %, or 30-50 wt. %, based on the total weight of the polymerized conjugated diene in polymer block B. Vinyl content can be measured before or after hydrogenation, via proton NMR.

In embodiments, the polymer block B constitutes from ≤ 25, or 5 - 25, or 10 - 25, or 15 - 25, or 5 - 20, or 5 - 15, 5 - 20 wt.%, based on the total weight of the multiblock copolymer.

In embodiments, block C comprises segments of one or more polymerized vinyl aromatic monomers selected from unsubstituted styrene monomers, ortho-substituted styrene monomers, para-substituted styrene monomer, meta-substituted styrene monomers, alpha-methylstyrene monomer, 1,1-diphenylethylene monomer, 1,2-diphenylethylene monomer, and mixtures thereof. In addition to the monomers and polymers noted, the C blocks may also comprise a hydrogenated copolymer of such monomer (s) with a conjugated diene selected from 1,3-butadiene, isoprene, and mixtures thereof, having a vinyl content of between 20 -80 mol %. These copolymers with hydrogenated dienes can be any random copolymers, tapered copolymers, block copolymers, or controlled distribution copolymers.

In embodiments, the polymer block C constitutes from 40-60 wt. %, or 45-55 wt.%, or 40-50 wt.%, based on the total weight of the multiblock copolymer.

In embodiments, the SEBS-Multiblock- copolymer is an alkyl halide substituted SEBS polymer (before quaternization). Examples of halides include chlorine, bromine, and iodine. Block C which is susceptible to quaternization can be selectively halogenated (brominated) via, (i) nucleophilic substitution reaction (SN2), or (ii) in a Friedel Craft (FC) alkylation electrophilic aromatic substitution reaction is known in the art. In SN2 type reaction, a para-methyl group from the aromatic monomer is halogenated, resulting in substitution at the para position. In FC alkylation reaction, the alkyl halide is attached to the polymerized vinyl aromatic monomer at the para position with the halogenated C1-C8 alkyl chain, prior to quaternization. In embodiments, block C has a linear side chain comprising a CH₂ spacer group with C1-C12 carbon atoms.

In embodiments, the SEBS-Multiblock- copolymer is functionalized with quaternary ammonium (QA) groups. Examples include benzyltrimethylammonium (TMA), dimethylpiperazinium (DMP), benzyldicyclohexylmethylammonium (MCH), benzyldiisopropylmethylammonium (MiPr), trimethylhexylammonium (TMHA), benzyldimethylhexylammonium (DMHA), dimethyl amine or trimethyl amine(TMA) or triethyl amine or alkyl(C12-16)dimethylbenzylammonium chloride, benzethonium chloride, benzyl-C12-18-alkyldimethyl (, benzyl (coconut oil alkyl) dimethylammonium chlorides, cetylpyridinium chloride, decyl isononyl dimethyl ammonium chloride, dioctyl dimethyl ammonium chloride, didecyl dimethyl ammonium chloride, laurylamine dipropylenediamine, N-octadecyldimethyl{3-(trimethoxysilyl)propyl}ammonium chloride, or tetradecyldimethyl(3-(trimethoxysilyl)propyl)ammonium chloride, Pyrrolidinium, imidazole, tetra-pyrrolidinium, benzyl phosphonium, piperidinium, bis ammonium, quinuclidine and mixtures thereof.

The degree of quaternization in the SEBS-Multiblock- copolymer ranges from 30 mol% to 95 mol%, or 15 - 80 mol%, or 20 - 70 mol%, or 25 - 60 mol%, or > 20 mol%, or > 50 mol%, based on the total number of monomer units.

In embodiments, the SEBS-Multiblock-copolymer (with or without the halide group) is also functionalized with the incorporation of additional functional groups into the C block of the base (precursor) polymer. Examples of functional groups include primary amines, acrylates, sulfides, epoxides, sulfur, etc.

In embodiments, the SEBS-Multiblock QA copolymer has a formula (I) 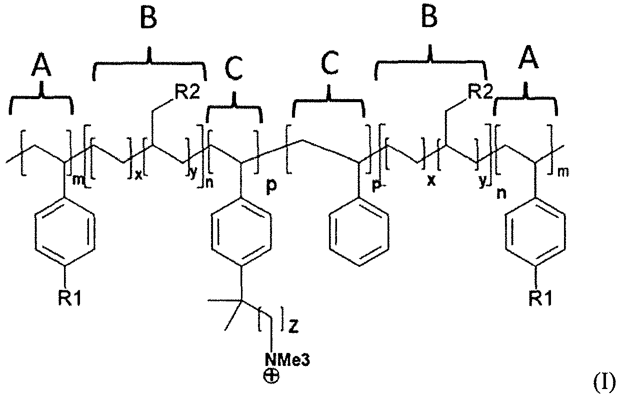 wherein z = 2-10, m, n, p, x and y ≥1, and N⁺Me3 is quaternary ammonium (QA) group in formula (I), R1 = Me or t-butyl , R2 = H or Me, A is an end block comprising polymerized substituted styrene monomers, C is a mid-block of polymerized styrene monomers, B is a polymerized conjugated diene block which is consisted of x block(s) of polymerized ethylene units and y block(s) of polymerized butylene or propylene units; and QAs in formula (I) can be other ones as shown below in formula (II): 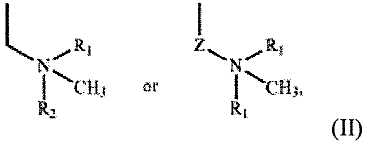 each of R₁ and R₂ in formula (II) is, independently, a linear alkyl chain or a cyclic alkyl chain, and Z is selected from a group consisting of a linear alkyl chain, a cyclic alkyl chain, and an alkylene ether chain.

Method for forming selectively quaternized SEBS-Multiblock copolymer: The selectively quaternized SEBS-Multiblock copolymer can be formed in a series of reaction steps. In the first step, a precursor SEBS is prepared by methods known in the art, e.g., see US Patent Publication Nos. US4894417, US4904731, US4898914, US5057582, US5705571, US7592390, US8445087. In embodiments, the precursor is prepared by sequential (or successive) polymerization of the monomers in solution (in solvent) in the presence of an initiator, with stepwise addition of monomer and initiator, followed by hydrogenation. In embodiments, the precursor is prepared by coupling the resulting block copolymers with a coupling agent before the hydrogenation step.

In embodiments after hydrogenation, the hydrogenated multiblock, i.e., the SEBS Multiblock- copolymer is converted to alkyl halide substituted polymer by reacting with an alkyl halide in Friedel Craft (FC) and/or in nucleophilic substitution (SN2) type reaction known in the art. Examples of halides include fluorine, chlorine, bromine, or iodine, and the substituted alkyl chain can be linear, branched, cyclic having C₁ - C₁₂ atoms. Alternatively, any brominating agent, e.g., 1,1-dimethyl-6-bromo-1-hexanol, can be used to obtain the alkyl halide substituted SEBS. In embodiments, the polymer block susceptible to quaternization is selectively halogenated by attaching the alkyl halide of C₁-C₁₂ at the para position of the polymerized vinyl aromatic monomer.

In embodiments, the alkyl halide substituted SEBS has a degree of halogenation of up to 100, or 1 - 99, or 5 - 90, or 10 - 80, or 20 - 70, or 30 - 90, or 40 - 80, or > 40, or > 50%, relative to the polymer block susceptible to quaternization.

In embodiments, the quaternization of the alkyl halide substituted SEBS is carried by reacting the alkyl halide substituted SEBS with at least one quaternizing agent (QA), e.g., a compound containing (i) di or multi amino groups and /or (ii) mixture of trimethyl amine and dimethyl amine groups in weight ratio of 50:50, or 40:60, or 30:70, or 20:80, or 10:90, or 90:10, or 80:20 or 70:30 or 60:40.

The quaternization of the alkyl halide substituted SEBS can be carried out by two methods. In one method in an embodiment, the alkyl halide substituted SEBS is dissolved in an organic solvent having a concentration of 5 - 50%, or 10 - 40%, or 5 - 30%, or 10 - 30%, or > 5%, or > 15% to obtain an alkyl halide substituted SEBS polymer solution. This solution is then mixed with a pre-dissolved quaternizing agent (QA) solution to obtain the quaternized SEBS-Multiblock copolymer. The resultant mixture is then cast onto a substrate to form the film or membrane.

In another embodiment, an alkyl halide substituted SEBS polymer solution is first cast onto a substrate to form a film. The film is then subjected to quaternization to obtain a SEBS-Multiblock -QA Copolymer by methods including but not limited to spray coating, or dip coating or treating the film with QA solution followed by drying to obtain the film. Multiple coatings can be applied sequentially. In embodiments, the film is formed into a common flat shape, a bag, hollow fiber, or hollow tube shape.

Membranes or Films Containing SEBS-Multiblock-QA Copolymer: The copolymer as formed is used for making membranes or films. In embodiments, in addition to the SEBS-Multiblock-QA Copolymer, optional components including a cross-linking agent, additives, polymers other than alkyl halide substituted SEBS, etc., can also be used / added to form the membrane / film.

Examples of other polymers include polytetrafluoroethylenes (PTFEs), polyolefins, polyimides, polyamides, polyesters, polystyrenes, polysulfones, polyketones, poly(2,6 dimethyl 1,4 phenylene)ether, poly(p-phenylene oxide) (PPO), polyphenylene ethers, polyisoprenes, polybutadienes, polyvinylidene fluorides, polycarbonates, polyetherimides, ethylene-vinyl alcohol copolymers, polyvinylidene chlorides, polyacrylates, polytertbutylstyrene, and mixtures thereof.

The molecular weight of the optional polymer component can be tailored to obtain the miscibility between the selectively quaternized styrenic multiblock copolymer and the 2^{nd} (optional) polymer. In embodiments, the optional polymer component is selected from PPO having a molecular weight ranging from 5 to 15 kg/mol, or 7 to 12 kg/mol, 7-9 kg/mol, or 10-12 kg/mol. In embodiments, the MW ratio of the second (optional) polymer and the MW of the A block ranging from 5:1 to 1:2, or 4:1 to 3:1, or 2:1 to 1:1.

In embodiments, the polymer blended with the selectively quaternized styrenic multiblock copolymer is present in an amount from 0.1- 50 wt.%, or 1-35 wt.%, or 5- 30 wt.%, or > 15 wt.%, or < 25 wt.%, or 15-25 wt.%, relative to the weight of the selectively quaternized styrenic multiblock copolymer.

The optional components can be mixed into / added to the alkyl halide substituted SEBS directly, or to the organic solvent before or after quaternization.

In embodiments, an anionic exchange membrane is formed by any of casting, electrospinning, extrusion, compression, dip coating ,flow coating, roll coating, bar coating, spray coating, curtain, rotogravure, brushing, wire wound rod coating, pan fed reverse roll coating, nip-fed coating, spraying, knife coating, spin coating, immersion coating, slot-die coating, ultrasonic spray coating, and the like. The film can be dried from room temperature to 80°C, or 30 - 70°C, or 35 - 65°C, with or without vacuum for a period of 1 hr. - 7 days, or 5 hrs. - 5 days, or 10 hrs. - 2 days. In embodiments, the film is a standalone film or supported on the substrate, e.g., glass, plastic, ceramic, porcelain, and the like. In embodiments, the obtained film has a specific morphology, e.g., lamellae or hexagonally packed cylinders, sphere, cylinder, and the like.

Examples of solvents include aliphatic hydrocarbons such as hexane, cyclohexane, halogenated hydrocarbons, e.g., methylene chloride or ethylene chlorides, water, isopropyl alcohol, acetone, N,N-dimethylacetamide, 1-methyl-2-pyrrolidinone, 1,3-dioxolane, 2-methoxy ethanol, dimethylformamide, or benzyl alcohol or mixtures thereof.

Properties of SEBS-Multiblock -QA Copolymer Membrane (Film): With the selectively quaternization of the interior segment (block "C") of the block copolymers, membranes or films (such as AEMs) made from the composition exhibit balanced physical properties, including elasticity and low swell property.

In embodiments, the film has a thickness of 0.1 - 500 µm, or 1 - 200 µm, or 10 - 100 µm, or 1 - 50 µm, or 20 - 150 µm, or 50 - 300 µm.

In embodiments, the film has a water uptake capacity of 5 - 100, or 10 - 90, or 20 - 80, or 30 - 60, or 10 - 50, 30 - 80 wt.%, based on total weight of the film.

In embodiments, the film in dry state has a tensile strength at break of at least 200 psi, or > 1,000 psi, or >1,500 psi, or at least 4000 psi, according to ASTM D412.

In embodiments the film has a wet tensile strength of > 100 psi, or > 500 psi, or > 1000 psi, or > 1500 psi, according to ASTM D412,
In embodiments, the film has elongation at break of at least 40%, or > 100%, or > 200%, or > 250%.

In embodiments, the film has an ion exchange capacity (IEC) of 1.0 - 3.5, or 1.2 - 3.0, or 1.5 - 3, or > 1, or < 3, or > 0.5 meq/g.

In embodiments, the film has a water vapor transport value greater than 1,000 g per m² per day using a gravimetric inverted cup method based on ASTM E 96/E 96M-05 at, < = 50° C. and > = 10% relative humidity (RH).

In embodiments, the film has a swellability of < 200% by weight, or < 100%, or < 75%, or < 50%, or < 30%. Swellability refers to shape stability, or changes to the dimensions of the film, % change here refers shape changes and not to water content of the polymers.

Applications: Other than AEMs, the SEBS-Multiblock-QA copolymer can be used in a variety of applications and end-uses. With the selectively quaternized interior blocks, the copolymer can be used in applications where the combination of good wet strength, good water, and proton transport characteristics, good methanol resistance, easy film or membrane formation, barrier properties, control of flexibility and elasticity, adjustable hardness, and thermal/oxidative stability are important.

In embodiments, the SEBS-Multiblock-QA copolymer is used as an ionomer or a membrane in electrochemical applications, e.g., water electrolyzers (electrolyte), fuel cells (separator phase), proton exchange membranes for fuel cells, dispersions of metal impregnated carbon particles in quaternized polymer cement for use in electrode assemblies, , acid batteries (electrolyte separator), supercapacitors (electrolyte), separation cell (electrolyte barrier) for metal recovery processes, sensors (particularly for sensing humidity) and the like. In embodiments, AEMs can be used in applications other than in electrolyzers or fuel cells, which can include humidity control devices, energy storage solutions such as in vanadium or iron redox flow battery membrane, or in lithium-ion batteries solid polymer electrolyte.

Examples: The following examples are intended to be non-limiting.

The degree of halogenation of the alkyl halide substituted SEBS can be determined by proton nuclear magnetic resonance spectroscopy (1H NMR; Varian 500 MHz spectrometer, 23°C) with CD₂Cl₂ as the solvent.

Mechanical properties, including toughness, Young's modulus, tensile strength, and elongation at break can be measured according to ASTM D412.

The components used in examples include:
SBC-1: A pentablock copolymer with configuration of tBS-EP-S-EP-tBS having polymer block B content of 22 wt.%, Mol. Wt. (Mₚ) of 90 kg/mol., and coupling efficiency of 68%.
SBC-2: A pentablock copolymer with configuration of tBS-EP-S-EP-tBS having polymer block B content of 12 wt.%, Mol. Wt. (Mₚ) of 84 kg/mol, and coupling efficiency of 75%.

As SEBS-Multiblock-QA copolymers exhibits a nano-scale phase-separated morphology, they similarly exhibit nano-scale ion-transporting channels, allowing for the highly effective conduction of ions.

Example 1: In this example, SEBS-Multiblock-QAs is prepared from the pentablock copolymer (SEBS- tBS-EP-S-EP-tBS) without the use of transition metal catalysts such as iridium or palladium. The reaction mechanism involves the alcoholysis of caprolactam molecule to obtain 6-(dimethylamino) hexanoic acid, followed by esterification and its subsequent methylation to tertiary alcohol, which is then used in the preparation of targeted SEBS-Multiblock-QA copolymer.

Preparation of the SEBS-Pentablock-QA polymer begins with SEBS-Pentablock copolymer compound (5) 0.50 g, 2.07 mmol styrene units, to which is added tertiary alcohol (1.29 g, 6.22 mmol) in, e.g., a 20 mL vial. The vial is then evacuated and purged with nitrogen. 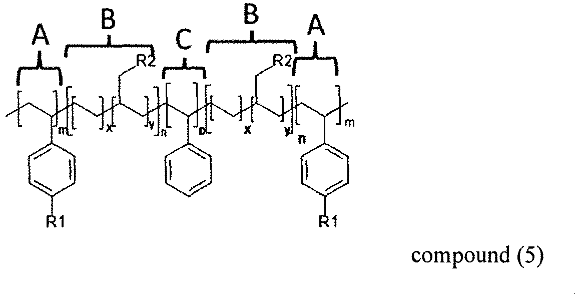 wherein R1=t-butyl, R2=H, A, B, C, m, n, p, x, and y are as previously defined.

Anhydrous dichloromethane (5 mL) is added, and the polymer is stirred until dissolved. After cooling, trifluoromethanesulfonic acid (0.55 mL, 6.22 mmol) is added. The reaction is stirred in the ice bath for one hour, after which the reaction mixture is poured into methanol to precipitate the polymer.

The polymer is then filtered, redissolved in chloroform, and precipitated in methanol, yielding the SEBS-Pentablock-alkBr polymer compound (6) after isolation and vacuum drying at room temperature for 6 hours. It is found that 59.3% of the styrene units of compound (6) reacted (17.7 mol % alkyl-bromide and 12.2 mol % unfunctionalized styrene units). Molecular weights as measured by GPC at 30° C. with THF include: SEBS-Mn=106,315 g/mol (PDI=1.04) and SEBS-alkBr-Mn 60,228 g/mol (PDI=2.07). Viscosities measured in toluene at 30° C are SEBS=0.82 dL/g and SEBS-alkBr=0.68 dL/g. 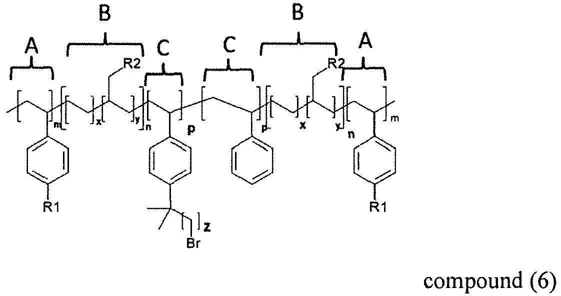 wherein R1, R2, A,B,C, m, n, p, x, and y are as previously defined, and z = 8. In the structure here, C blocks are functionalized to have an average degree of functionalization from 30 mol% to 95 mol%. One of the C blocks may have a degree of functionalization less than other C blocks or may not be functionalized at all.

Next, 0.15 g of compound (6) is dissolved in toluene (3 mL), filtered, cast onto a Teflon plate, and dried under a gentle flow of air at 80° C. The thin SEBS-Pentablock alkBr film (approximately 30-40 µm thick) is then removed from the plate by immersion in water and immersed in aqueous trimethylamine solution (45 wt % in water) and heated to 50° C for 48 hours. The film is then ion-exchanged to hydroxide form by immersion in 1 M NaOH at room temperature for 48 hours, yielding SEBS-Pentablock-QA polymer compound (7). 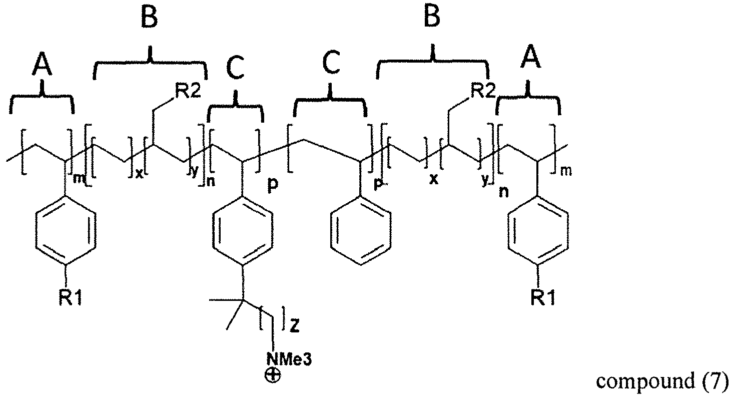 wherein R1, R2, A,B,C, m, n, p, x, y, and z are as previously defined, and N⁺Me3 is a quaternary ammonium group.

Example -2: In this example, a SEBS-Multiblock-QA copolymer is prepared also without the use of a transition metal catalyst, and with caprolactone molecule as a starting material for alkylation in Grignard type reaction for preparing the targeted SEBS-Multiblock-QA copolymer.

Preparation of SEBS-Multiblock-QA copolymer begins with SEBS-Pentablock copolymer compound (5) (0.30 g, 4.64 mmol styrene units), to which 6-bromohexanoyl chloride (1.49 g, 6.96 mmol) added in a 100 mL round bottom flask under nitrogen. Anhydrous dichloromethane (15 mL) is added and the mixture and stirred until dissolved. The flask is cooled for addition of AlCl₃ powder (0.93 g, 6.96 mmol). The reaction is stirred further in an ice bath for one hour, after which the reaction mixture is poured into methanol solution to precipitate the polymer. The precipitated polymer is then filtered, redissolved in chloroform, and again precipitated in methanol to yield SEBS-Pentablock -acyl-Br ketone polymer compound (8) (0.38 g). The compound (8) obtained after isolation and vacuum drying at room temperature for 6 hours.

In the next step, the SEBS-Pentablock-acyl-Br ketone polymer compound (8) is reduced to yield the SEBS-alk-Br of compound (9). The reduced compound (9) is obtained by first dissolving compound (8) (0.38 g, 0.91 mmol ketone) in 20 ml anhydrous dichloromethane in a flask and stirring until the polymer is dissolved. Triethylsilane (Et₃. SiH; 0.58 mL, 3.64 mmol) and trifluoroacetic acid (0.56 mL, 7.28 mmol) is added to the stirring mixture, which is then heated to 45⁰C for 14 hours. The reaction mixture is poured into methanol after cooling. The precipitated polymer, is filtered, redissolved in chloroform, and again precipitated in methanol to yield the ketone reduced SEBS- Pentablock -alkBr polymer compound (9). 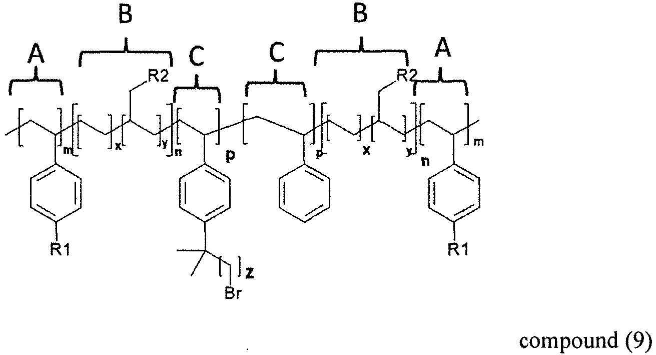 wherein R1, R2, A,B,C, m, n, p, x, y, and z as previously defined.

Compound (9) is then aminated to yield a quaternized compound (10). 0.15 g of compound (10) is dissolved in 3 mL of toluene. The solution is then cast onto a Teflon plate, and dried under air at 80° C, for a dry film of 30-40 µm thick. The film is then immersed in an aqueous trimethylamine solution (45 wt % in water) and heated to 50⁰C for 48 hours. The film is then rinsed with water to get the SEBS-Pentablock -alkTMA polymer which is quaternized SEBS- Pentablock-QA polymer compound (10). 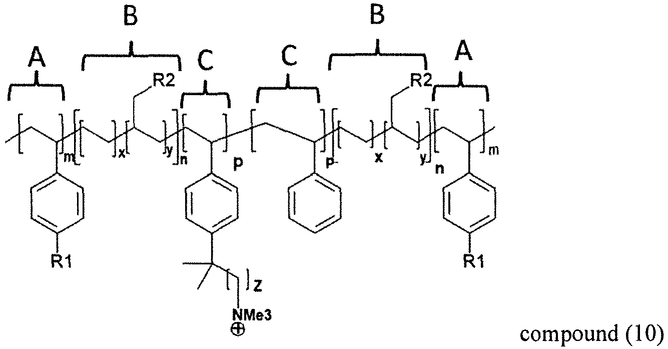 values of R1, R2, A,B,C, m, n, p, x, y, and z as previously defined, and N⁺Me3 is a quaternary ammonium (QA).

Table 1 illustrates structures that can be formed from the above steps, with expected value for IEC (meq./g).

**Table 1**

| Sample | Polymer Backbone | Chemistry of "spacer" introduction | "Spacer" Example | Type of Ammonium quats | mol% of N | IEC, (meq./g) Theo. |
|---|---|---|---|---|---|---|
| | | | | | | |
| 1 | A-B-C-B-A | Electrophilic Aromatic Substitution (EAS) | C-para-1,1-dimethylhexanyl | TMA | 20 | 2.12 |
| 2 | | | | MPI | 20 | 2.33 |
| 3 | | | | TMHA | 20 | 2.09 |
| 4 | | | | TMA+TMHA | 20 ( 16:4) | 2.11 |
| 5 | | | | MPI+TMHA | 20 (16:4) | 2.13 |
| 6 | A-B/C-A | | C-para-1,1-dimethylhexanyl | TMA | 20 | 2.12 |
| 7 | | | | MPI | 20 | 2.33 |
| 8 | | | | TMHA | 20 | 2.09 |
| 9 | | | | TMA+TMHA | 20 ( 16:4) | 2.11 |
| 10 | | | | MPI+TMHA | 20 (16:4) | 2.13 |
| 11 | C-B-A-B-C | Benzylic halogenation (Cl and Br) | A-para-methyl | TMA | 20 | 2.12 |
| 12 | | | | MPI | 20 | 2.33 |
| 13 | | | | TMHA | 20 | 2.09 |
| 14 | | | | TMA+TMHA | 20 ( 16:4) | 2.11 |
| 15 | | | | MPI+TMHA | 20 (16:4) | 2.13 |
| 16 | C-B/A-C | | A-para-1,1-dimethylhexanyl | TMA | 20 | 2.12 |
| 17 | | | | MPI | 20 | 2.33 |
| 18 | | | | TMHA | 20 | 2.09 |
| 19 | | | | TMA+TMHA | 20 ( 16:4) | 2.11 |
| 20 | | | | MPI+TMHA | 20 (16:4) | 2.13 |

TMA - Trimethylamine; MPI - Methylpiperidine; TMHA - N,N,N',N'-Tetramethyl-1,6-hexanediamine; C is styrene unit and A are para-alkyl substituted styrene.

Although the terms "comprising" and "including" have been used herein to describe various aspects, the terms "consisting essentially of" and "consisting of" can be used in place of "comprising" and "including" to provide for more specific aspects of the disclosure and are also disclosed.

## Claims

1. A selectively quaternized hydrogenated styrenic block copolymer comprising:
at least a block A derived from para-substituted vinyl aromatic monomer;
at least a block B comprising a polymerized hydrogenated 1,4-isoprene unit or 1,2 and 1-4 butadiene units;
a block C as a mid-block and derived from a vinyl aromatic monomer susceptible to quaternization and;
wherein the selectively quaternized hydrogenated styrenic block copolymer:
has a general configuration of: a pentablock; a tetrablock, or a triblock with a random structure containing B/C or C/B;
has an ion exchange capacity (IEC) from 0.5 to 4.0 meq/g; and
block C is quaternized to have quaternary ammonium cations and a degree of quaternization from 30 mol% to 95 mol%.

2. The selectively quaternized hydrogenated styrenic block copolymer of claim 1, wherein the selectively quaternized hydrogenated styrenic block copolymer is a pentablock having a structure selected from A-B-C-B-A, A-C-B-C-A, B-C-A-C-B, and mixtures thereof.

3. The selectively quaternized hydrogenated styrenic block copolymer of any of claims 1-2, wherein the selectively quaternized hydrogenated styrenic block copolymer is a pentablock having a structure: 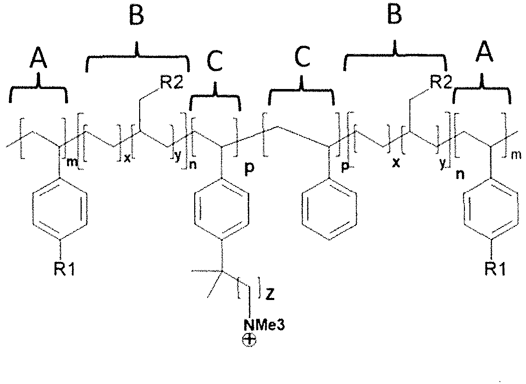 wherein z = 2-10, m, n, p, x and y ≥1, and N⁺Me3 is quaternary ammonium (QA) group in formula (I), R1 = Me or t-butyl , R2 = H or Me, A is an end block comprising polymerized substituted styrene monomers, C is a mid-block of polymerized styrene monomers, B is a polymerized conjugated diene block which is consisted of x block(s) of polymerized ethylene units and y block(s) of polymerized butylene or propylene units.

4. The selectively quaternized hydrogenated styrenic block copolymer of claim 1, wherein the selectively quaternized hydrogenated styrenic block copolymer is a tetrablock having a structure A-B-C-A.

5. The selectively quaternized hydrogenated styrenic block copolymer of claim 1, wherein the selectively quaternized hydrogenated styrenic block copolymer is a triblock having a structure selected from A-B/C-A, A-C/B-A, and mixtures thereof.

6. The selectively quaternized hydrogenated styrenic block copolymer of any of claims 1, 2, 4 and 5, wherein the selectively quaternized hydrogenated styrenic block copolymer has an ion exchange capacity of 0.7-3.5 meq/g.

7. The selectively quaternized hydrogenated styrenic block copolymer of any of claims 1, 2, 4 and 5, wherein the block C comprises a linear alkyl side chain susceptible to electrophilic aromatic substitution reaction, wherein the linear alkyl side chain has a CH2 spacer group with C1-C12 carbon atoms, and wherein the CH2 spacer group is derived from a monomer selected from the group consisting of caprolactam, caprolactone, and mixture thereof.

8. The selectively quaternized hydrogenated styrenic block copolymer of any of claims 1, 2, 4 and 5, wherein each A and B block of the styrenic block copolymer is a polymer block resistant to electrophilic aromatic substitution reaction.

9. The selectively quaternized hydrogenated styrenic block copolymer of any of claims 1, 2, 4 and 5, wherein
the selectively quaternized hydrogenated styrenic block copolymer has a polystyrene content of 70 to 95 wt.%; and
the block B before hydrogenation has a vinyl content of 5 to 80 wt.% based on total weight of the polymerized conjugated diene monomer in the block B.

10. The selectively quaternized hydrogenated styrenic block copolymer of any of claims 1, 2, 4 and 5, wherein block C is quaternized by a quaternizing agent having an amine functionality obtained from trimethyl amine, dimethylamine, monoamine, diamine, multiamine groups, and mixtures thereof.

11. An anion exchange membrane comprises the selectively quaternized hydrogenated styrenic block copolymer of any of claims 1-10, wherein the membrane has a thickness of 0.1 to 500 µm.

12. The anion exchange membrane of claim 11, wherein the anion exchange membrane has at least one of:
a water vapor transport value greater than 1,000 g per m2 per day according to ASTM E 96/E 96M-05 at < = 50° C, and 10% Relative Humidity (RH);
a wet tensile strength of >100 psi according to ASTM D412;
a swellability of < 200% by weight, or < 100%, or < 75%, or < 50%, or < 30%.

13. The anion exchange membrane of claim 11, further comprises at least one another polymer selected from the group consisting of polytetrafluoroethylenes (PTFEs), polyolefins, polyimides, polyamides, polyesters, polystyrenes, polysulfones, polyketones, poly(p-phenylene oxide) (PPO), polyphenylene ethers, polyisoprenes, polybutadienes, polyvinylidene fluorides, polycarbonates, polyetherimides, ethylene-vinyl alcohol copolymers, polyvinylidene chlorides, polyacrylates, polytertbutylstyrene, and mixtures thereof.

14. An electrode assembly comprising the anion exchange membrane of any of claims 11-13.

## Patentansprüche

1. Selektiv quaternisiertes hydriertes Styrolblockcopolymer, umfassend:
zumindest einen Block A, der von einem para-substituierten vinylaromatischen Monomer abgeleitet ist;
zumindest einen Block B, der eine polymerisierte hydrierte 1,4-Isopreneinheit oder 1,2- und 1-4-Butadieneinheiten umfasst;
einen Block C als Mittelblock und abgeleitet von einem vinylaromatischen Monomer, das quaternisierbar ist, und;
wobei das selektiv quaternisierte hydrierte Styrolblockcopolymer:
eine allgemeine Konfiguration von: einem Pentablock; einem Tetrablock oder einem Triblock mit einer zufälligen Struktur, die B/C oder C/B enthält, aufweist; eine Ionenaustauschkapazität (IEC) von 0,5 bis 4,0 meq/g aufweist; und
Block C quaternisiert ist, um quaternäre Ammoniumkationen und einen Quaternisierungsgrad von 30 Mol-% bis 95 Mol-% aufzuweisen.

2. Selektiv quaternisiertes hydriertes Styrolblockcopolymer nach Anspruch 1,
wobei das selektiv quaternisierte hydrierte Styrolblockcopolymer ein Pentablock mit einer Struktur ist, die aus A-B-C-B-A, A-C-B-C-A, B-C-A-C-B und Mischungen davon ausgewählt ist.

3. Selektiv quaternisiertes hydriertes Styrolblockcopolymer nach einem der Ansprüche 1 bis 2, wobei das selektiv quaternisierte hydrierte Styrolblockcopolymer ein Pentablock mit der folgenden Struktur ist: 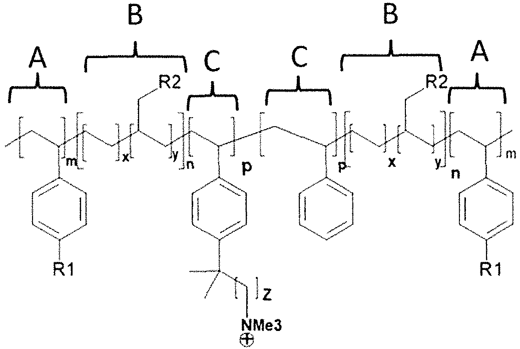 wobei z = 2 bis 10, m, n, p, x und y ≥ 1 und N⁺Me3 eine quaternäre Ammonium-(QA-)Gruppe in Formel (I) ist, R1 = Me oder t-Butyl, R2 = H oder Me, A ein Endblock ist, der polymerisierte substituierte Styrolmonomere umfasst, C ein Mittelblock aus polymerisierten Styrolmonomeren ist, B ein polymerisierter konjugierter Dienblock ist, der aus einem x-Block (x-Blöcken) aus polymerisierten Ethyleneinheiten und einem y-Block (y-Blöcken) aus polymerisierten Butylen- oder Propyleneinheiten besteht.

4. Selektiv quaternisiertes, hydriertes Styrolblockcopolymer nach Anspruch 1,
wobei das selektiv quaternisierte hydrierte Styrolblockcopolymer ein Tetrablock mit einer Struktur A-B-C-A ist.

5. Selektiv quaternisiertes hydriertes Styrolblockcopolymer nach Anspruch 1,
wobei das selektiv quaternisierte hydrierte Styrolblockcopolymer ein Triblock mit einer Struktur ist, die aus A-B/C-A, A-C/B-A und Mischungen davon ausgewählt ist.

6. Selektiv quaternisiertes hydriertes Styrolblockcopolymer nach einem der Ansprüche 1, 2, 4 und 5, wobei das selektiv quaternisierte hydrierte Styrolblockcopolymer eine Ionenaustauschkapazität von 0,7 bis 3,5 meq/g aufweist.

7. Selektiv quaternisiertes hydriertes Styrolblockcopolymer nach einem der Ansprüche 1, 2, 4 und 5, wobei der Block C eine lineare Alkylseitenkette umfasst, die für eine elektrophile aromatische Substitutionsreaktion empfänglich ist, wobei die lineare Alkylseitenkette eine CH2-Spacer-Gruppe mit C2-C12-Kohlenstoffatomen aufweist, und wobei die CH2-Spacer-Gruppe von einem Monomer abgeleitet ist, das aus der Gruppe ausgewählt ist, die aus Caprolactam, Caprolacton und einer Mischung davon besteht.

8. Selektiv quaternisiertes hydriertes Styrolblockcopolymer nach einem der Ansprüche 1, 2, 4 und 5, wobei jeder A- und B-Block des Styrolblockcopolymers ein Polymerblock ist, der gegen eine elektrophile aromatische Substitutionsreaktion beständig ist.

9. Selektiv quaternisiertes hydriertes Styrolblockcopolymer nach einem der Ansprüche 1, 2, 4 und 5, wobei
das selektiv quaternisierte hydrierte Styrolblockcopolymer einen Polystyrolgehalt von 70 bis 95 Gew.-% aufweist; und
der Block B vor der Hydrierung einen Vinylgehalt von 5 bis 80 Gew.-%, bezogen auf das Gesamtgewicht des polymerisierten konjugierten Dienmonomers in dem Block B, aufweist.

10. Selektiv quaternisiertes hydriertes Styrolblockcopolymer nach einem der Ansprüche 1, 2, 4 und 5, wobei der Block C durch ein Quaternisierungsmittel mit einer Aminfunktionalität, die aus Trimethylamin, Dimethylamin, Monoamin, Diamin, Multiamingruppen und Mischungen davon erhalten wird, quaternisiert ist.

11. Anionenaustauschermembran, umfassend das selektiv quaternisierte hydrierte Styrolblockcopolymer nach einem der Ansprüche 1 bis 10, wobei die Membran eine Dicke von 0,1 bis 500 µm aufweist.

12. Anionenaustauschermembran nach Anspruch 11, wobei die
Anionenaustauschermembran zumindest eines aufweist von:
einen Wasserdampftransportwert größer als 1.000 g pro m² pro Tag gemäß ASTM E96/E96M-05 bei < = 50°C und 10% relativer Luftfeuchtigkeit (RH);
eine Nasszugfestigkeit von > 100 psi gemäß ASTM D412;
eine Quellfähigkeit von < 200 Gew.-% oder < 100% oder < 75% oder < 50% oder < 30%.

13. Anionenaustauschermembran nach Anspruch 11, weiterhin umfassend zumindest ein anderes Polymer, das aus der Gruppe ausgewählt ist, die aus Polytetrafluorethylenen (PTFEs), Polyolefinen, Polyimiden, Polyamiden, Polyestern, Polystyrolen, Polysulfonen, Polyketonen, Poly(p-phenylenoxid) (PPO), Polyphenylenethern, Polyisoprenen, Polybutadienen, Polyvinylidenfluoriden, Polycarbonaten, Polyetherimiden, Ethylen-Vinylalkohol-Copolymeren, Polyvinylidenchloriden, Polyacrylaten, Polytertbutylstyrol und Mischungen davon besteht.

14. Elektrodenanordnung, umfassend die Anionenaustauschermembran nach einem der Ansprüche 11 bis 13.

## Revendications

1. Copolymère styrénique séquencé hydrogéné sélectivement quaternisé comprenant :
au moins une séquence A dérivée d'un monomère aromatique vinylique para-substitué ;
au moins une séquence B comprenant une unité 1,4-isoprène hydrogénée polymérisée ou des unités 1,2 et 1-4 butadiène ;
une séquence C en tant que séquence intermédiaire et dérivée d'un monomère aromatique vinylique sensible à la quaternisation et ;
dans lequel le copolymère styrénique séquencé hydrogéné sélectivement quaternisé :
a une configuration générale de : une pentaséquence ; une tétraséquence, ou une triséquence avec une structure aléatoire contenant B/C ou C/B ;
a une capacité d'échange d'ions (IEC) de 0,5 à 4,0 meq/g ; et
la séquence C est quaternisée pour avoir des cations ammonium quaternaires et un degré de quaternisation de 30 % en moles à 95 % en moles.

2. Copolymère styrénique séquencé hydrogéné sélectivement quaternisé selon la revendication 1, dans lequel le copolymère styrénique séquencé hydrogéné sélectivement quaternisé est une pentaséquence ayant une structure choisie parmi A-B-C-B-A, A-C-B-C-A, B-C-A-C-B, et des mélanges de celles-ci.

3. Copolymère styrénique séquencé hydrogéné sélectivement quaternisé selon l'une quelconque des revendications 1 à 2, dans lequel le copolymère styrénique séquencé hydrogéné sélectivement quaternisé est une pentaséquence ayant une structure : 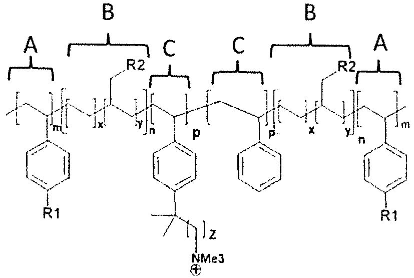 où z = 2 à 10, m, n, p, x et y ≥1, et N⁺Me3 est un groupe ammonium quaternaire (QA) dans la formule (I), R1 = Me ou t-butyle, R2 = H ou Me, A est une séquence d'extrémité comprenant des monomères de styrène substitués polymérisés, C est une séquence intermédiaire de monomères de styrène polymérisés, B est une séquence de diène conjugué polymérisé qui est constituée d'une ou plusieurs séquences x d'unités d'éthylène polymérisées et d'une ou plusieurs séquences y d'unités de butylène ou de propylène polymérisées.

4. Copolymère styrénique séquencé hydrogéné sélectivement quaternisé selon la revendication 1, dans lequel le copolymère styrénique séquencé hydrogéné sélectivement quaternisé est une tétraséquence ayant une structure A-B-C-A.

5. Copolymère styrénique séquencé hydrogéné sélectivement quaternisé selon la revendication 1, dans lequel le copolymère styrénique séquencé hydrogéné sélectivement quaternisé est une triséquence ayant une structure choisie parmi A-B/C-A, A-C/B-A, et des mélanges de celles-ci.

6. Copolymère styrénique séquencé hydrogéné sélectivement quaternisé selon l'une quelconque des revendications 1, 2, 4 et 5, dans lequel le copolymère styrénique séquencé hydrogéné sélectivement quaternisé a une capacité d'échange d'ions de 0,7 à 3,5 meq/g.

7. Copolymère styrénique séquencé hydrogéné sélectivement quaternisé selon l'une quelconque des revendications 1, 2, 4 et 5, dans lequel la séquence C comprend une chaîne latérale alkyle linéaire sensible à une réaction de substitution aromatique électrophile, dans lequel la chaîne latérale alkyle linéaire a un groupe espaceur CH2 avec des atomes de carbone C1 à C12, et dans lequel le groupe espaceur CH2 est dérivé d'un monomère choisi dans le groupe constitué par le caprolactame, la caprolactone et un mélange de ceux-ci.

8. Copolymère séquencé styrénique hydrogéné sélectivement quaternisé selon l'une quelconque des revendications 1, 2, 4 et 5, dans lequel chaque séquence A et B du copolymère séquencé styrénique est une séquence polymère résistante à la réaction de substitution aromatique électrophile.

9. Copolymère styrénique séquencé hydrogéné sélectivement quaternisé selon l'une quelconque des revendications 1, 2, 4 et 5, dans lequel
le copolymère bloc styrénique hydrogéné sélectivement quaternisé a une teneur en polystyrène de 70 à 95 % en poids ; et
la séquence B avant hydrogénation a une teneur en vinyle de 5 à 80 % en poids sur la base du poids total du monomère de diène conjugué polymérisé dans la séquence B.

10. Copolymère séquencé styrénique hydrogéné sélectivement quaternisé selon l'une quelconque des revendications 1, 2, 4 et 5, dans lequel la séquence C est quaternisée par un agent de quaternisation ayant une fonctionnalité amine obtenue à partir de groupes triméthylamine, diméthylamine, monoamine, diamine, multiamine et de mélanges de ceux-ci.

11. Membrane échangeuse d'anions comprenant le copolymère styrénique séquencé hydrogéné sélectivement quaternisé selon l'une quelconque des revendications 1 à 10, dans laquelle la membrane a une épaisseur de 0,1 à 500 µm.

12. Membrane échangeuse d'anions selon la revendication 11, dans laquelle la membrane échangeuse d'anions a au moins l'une parmi :
une valeur de transport de vapeur d'eau supérieure à 1 000 g par m2 et par jour selon la norme ASTM E 96/E 96M-05 à < = 50 °C, et 10 % d'humidité relative (RH) ;
une résistance à la traction à l'état humide >100 psi selon la norme ASTM D412 ;
une aptitude au gonflement < 200 % en poids, ou < 100 %, ou < 75 %, ou < 50 %, ou < 30 %.

13. Membrane échangeuse d'anions selon la revendication 11, comprenant en outre au moins un autre polymère choisi dans le groupe constitué par les polytétrafluoroéthylènes (PTFE), les polyoléfines, les polyimides, les polyamides, les polyesters, les polystyrènes, les polysulfones, les polycétones, le poly(oxyde de p-phénylène) (PPO), les polyphénylène éthers, les polyisoprènes, les polybutadiènes, les fluorures de polyvinylidène, les polycarbonates, les polyétherimides, les copolymères éthylène-alcool vinylique, les chlorures de polyvinylidène, les polyacrylates, le polytertbutylstyrène et des mélanges de ceux-ci.

14. Ensemble électrode comprenant la membrane échangeuse d'anions selon l'une quelconque des revendications 11 à 13.
